# EUROPEAN PATENT APPLICATION

(11) **EP 4 786 677 A1**
(43) Date of publication of application: **05.08.2026**
(21) Application number: 24871931.2
(22) Date of filing: 13.09.2024
(51) Int. Cl.: D21H 13/26, B32B 5/02, B32B 7/027, B32B 27/34, B64U 20/65, B64U 50/19, D04H 1/4326, D21H 17/54, D21H 27/30, H01M 10/61, H01M 10/625, H01M 10/658, H01M 50/231, H01M 50/342

(54) **FIBROUS STRUCTURE, HEAT INSULATION MATERIAL, HOUSING DEVICE, BATTERY, FLYING BODY, AND METHOD FOR PRODUCING FIBROUS STRUCTURE**

(30) Priority: 29.09.2023 JP 2023170445
(71) Applicant: Softbank Corp., Tokyo 105-7529 (JP); Toray Kapton Co., Ltd., Tokyo 103-0023 (JP)
(72) Inventor: FUKUCHI Svetlana, Tokyo 105-7529 (JP); SAITO Takaya, Tokyo 105-7529 (JP); TAKAYANAGI Yoshiki, Tokyo 105-7529 (JP); MACHIDA Hideaki, Tokyo 103-0023 (JP)
(74) Representative: Dilg, Haeusler, Schindelmann Patentanwaltsgesellschaft mbH
(86) International application number: PCT/JP2024/032995
(87) International publication number: WO 2025/070136

(57) **Abstract**

A fibrous structure includes a plurality of fibers consisting substantially of polyimide resin. A ratio of a mass of the plurality of fibers to a mass of the fibrous structure is 70 mass% or more. A thickness of the fibrous structure is 1 mm or more. A basis weight of the fibrous structure is 40 g/m2 or more and 150 g/m2 or less. A length of each of the plurality of fibers may be 1.0 mm or more and 10.0 mm or less. A width of each of the plurality of fibers may be 1 µm or more and 100 µm or less. A thermal conductivity of the fibrous structure measured in accordance with JIS L 1927 may be 0.020 W/m·K or more and 0.040 W/m·K or less.

## Description

### TECHNICAL FIELD

The present invention relates to a fibrous structure, a thermal insulation material, a housing device, a battery, a flight vehicle, and a method for producing the fibrous structure.

### BACKGROUND ART

Patent Documents 1 and 2 disclose a polyimide fiber paper obtained by accumulating and pressurizing fibers consisting of non-thermoplastic polyimide resin.

### (RELATED ART DOCUMENTS)

### (PATENT DOCUMENTS)

Patent Document 1: Japanese Patent Application Publication No. 2019-035157
Patent Document 2: Japanese Patent Application Publication No. 2023-051247

### GENERAL DISCLOSURE

In a first aspect of the present invention, a fibrous structure is provided. For example, the above-described fibrous structure includes a plurality of fibers consisting substantially of polyimide resin. In the above-described fibrous structure, for example, a ratio of a mass of the plurality of fibers to a mass of the fibrous structure is 70 mass% or more. In the above-described fibrous structure, for example, a thickness of the fibrous structure is 1 mm or more. In the above-described fibrous structure, for example, a basis weight of the fibrous structure is 40 g/m² or more and 150 g/m² or less. The polyimide resin may be a non-thermoplastic polyimide resin. A ratio of a mass of the non-thermoplastic polyimide resin to the mass of the plurality of fibers may be 70% or more.

In any of the fibrous structures described above, a length of each of the plurality of fibers may be 1.0 mm or more and 10.0 mm or less. In any of the fibrous structures described above, a width of each of the plurality of fibers may be 1 µm or more and 100 µm or less.

Any of the fibrous structures described above may have a film-like shape, a sheet-like shape, or a plate-like shape. In any of the fibrous structures described above, the plurality of fibers may include a first fiber which is disposed such that its length direction is substantially parallel to an in-plane direction of the fibrous structure. The plurality of fibers may include a second fiber which is disposed such that its length direction is substantially parallel to a thickness direction of the fibrous structure. In any of the fibrous structures described above, in a cross section of the fibrous structure observed using a scanning electron microscope, a ratio of a number of at least one second fiber to a number of at least one first fiber, each being the first fiber, may be less than 30%.

In any of the fibrous structures described above, under a first environment in which a pressure is 100 kPa and a temperature is a room temperature, a thermal conductivity of the fibrous structure measured in accordance with JIS L 1927 may be 0.020 W/m·K or more and 0.040 W/m·K or less. The fibrous structure according to claim 1.

In any of the fibrous structures described above, a thermal conductivity of the fibrous structure estimated from a power RMS value of a heater required to maintain a temperature of a thermocouple, which is arranged at a central portion inside an MB-type aluminum case arranged under a second environment in which a pressure is 5 kPa and a temperature is -60°C, at 20°C or higher and 30°C or lower may be 0.005 W/m·K or more and 0.030 W/m·K or less. For example, a power RMS value of the heater is measured in a state in which a whole of the MB-type aluminum case is covered with the fibrous structure having a vapor-deposited aluminum layer on its surface. For example, a thickness of the fibrous structure used to measure the power RMS value of the heater is 9.0 mm. For example, a thickness of the vapor-deposited aluminum layer used to measure the power RMS value of the heater is 150 nm. For example, dimensions of the MB-type aluminum case used to measure the power RMS value of the heater are 140 mm in length, 60 mm in width, and 140 mm in height.

In a second aspect of the present invention, a fibrous structure is provided. For example, the above-described fibrous structure is obtained by laminating a plurality of nonwoven fabrics fabricated by a wet method, dispersing a polyimide precursor inside the plurality of nonwoven fabrics laminated, and then imidizing the polyimide precursor. In the above-described fibrous structure, for example, each of the plurality of nonwoven fabrics includes a plurality of fibers consisting substantially of polyimide resin. For example, a thickness of the above-described fibrous structure is 1 mm or more. A ratio of a mass of the polyimide resin to a mass of the plurality of fibers may be 70% or more.

In a third aspect of the present invention, a thermal insulation material is provided. For example, the above-described thermal insulation material includes any of the fibrous structures according to the first or second aspect.

The above-described thermal insulation material may include a reflector which reflects radiant heat. In the above-described thermal insulation material, for example, the above-described reflector is disposed on at least a part of a surface of the fibrous structure.

In a fourth aspect of the present invention, a housing device is provided. For example, the above-described housing device includes a housing portion for housing an article. In the above-described housing device, for example, the housing portion includes a first member which has a placement surface on which the article is placed. In the above-described housing device, for example, the housing portion includes a second member which is disposed on a side of the placement surface of the first member and forms a space for housing the article together with the first member. In the above-described housing device, for example, the second member has any of the fibrous structures according to the first or second aspect.

In the above-described housing device, the housing portion may include a discharge member for discharging gas inside the space to an outside of the space when a pressure of the gas inside the space becomes greater than a predetermined value.

In a fifth aspect of the present invention, a battery is provided. For example, the above-described battery includes the above-described housing device according to the fourth aspect. For example, the above-described battery includes a power storage device which is disposed inside the space of the housing device.

In a sixth aspect of the present invention, a flight vehicle is provided. For example, the above-described flight vehicle includes the above-described battery according to the fifth aspect. For example, the above-described flight vehicle includes a propulsive force generation device which generates a propulsive force by using electrical energy accumulated in the battery.

In a seventh aspect of the present invention, a method for producing a fibrous structure is provided. For example, the above-described method includes laminating a plurality of nonwoven fabrics fabricated by a wet method to fabricate a laminate having a thickness of 1 mm or more. For example, the above-described method includes dispersing a polyimide precursor inside the plurality of nonwoven fabrics constituting the laminate. For example, the above-described method includes imidizing the polyimide precursor. In the above-described method, for example, each of the plurality of nonwoven fabrics includes a plurality of fibers consisting substantially of polyimide resin. A ratio of a mass of the polyimide resin to a mass of the plurality of fibers may be 70% or more.

In any of the methods described above, the laminating may include laminating the plurality of nonwoven fabrics such that a pressure applied to each of the plurality of nonwoven fabrics is less than 50 Pa. In any of the methods described above, the dispersing may include dispersing the polyimide precursor inside the plurality of nonwoven fabrics such that the pressure applied to each of the plurality of nonwoven fabrics is less than 50 Pa. In any of the methods described above, the imidizing may be include imidizing the polyimide precursor such that the pressure applied to each of the plurality of nonwoven fabrics is less than 50 Pa.

The summary clause does not necessarily describe all necessary features of the embodiments of the present invention. The present invention may also be a sub-combination of the features described above.

### BRIEF DESCRIPTION OF THE DRAWINGS

Fig. 1 schematically illustrates an example of a system configuration of a flight vehicle 100.
Fig. 2 schematically illustrates an example of a cross-sectional view of a power storage battery 110.
Fig. 3 schematically illustrates an example of a planar cross-sectional view of the power storage battery 110.
Fig. 4 schematically illustrates an example of a cross section of a thermal insulation member 410 in a thickness direction.
Fig. 5 schematically illustrates an example of a manufacturing method of the power storage battery 110.
Fig. 6 schematically illustrates an example of a manufacturing method of a thermal insulation member 220.

### DESCRIPTION OF EXEMPLARY EMBODIMENTS

According to one embodiment exemplified herein (may be referred to as the present embodiment), a fibrous structure including a plurality of fibers is provided. Each of the plurality of fibers described above-is, for example, a short fiber consisting substantially of polyimide resin. In the present embodiment, the fibrous structure contains the above-described short fiber as a main component, and a ratio of a mass of the plurality of fibers to a mass of the fibrous structure is, for example, 70 mass% or more.

The above-described fibrous structure has, for example, a thickness of 1 mm or more and a basis weight of 40 g/m² or more and 150 g/m² or less. Accordingly, a material that is lightweight and excellent in thermal insulation properties can be obtained. In addition, the polyimide resin is excellent in electrical insulation, heat resistance, cold resistance, flame retardancy, chemical resistance, and mechanical properties. Therefore, the above-described fibrous structure has a composition, a structure, and/or physical properties particularly suitable as a thermal insulation material of a thermal insulation device mounted on a flight vehicle capable of flying in a stratosphere.

A vacuum insulation panel (may be referred to as VIP) may be used as the thermal insulation material of the thermal insulation device. However, when the VIP is used as the thermal insulation material of the thermal insulation device mounted on the flight vehicle capable of flying in the stratosphere, residual air inside the VIP may expand due to pressure fluctuations accompanying ascent and descent of the flight vehicle, and the VIP may be damaged. In particular, in case where the thermal insulation device is used for thermal insulation of a battery mounted on the flight vehicle, when the VIP of the thermal insulation device is damaged, the battery is exposed to a cryogenic environment, and charge/discharge properties of the battery significantly deteriorate.

On the other hand, a polyimide film has the above-described excellent properties, and is used in a wide range of fields such as an aerospace field, an automobile field, or a communication field. However, as for the polyimide film, it is difficult to improve its thermal insulation due to properties possessed by a film.

On the other hand, the present inventors have found that, by laminating a plurality of nonwoven fabrics fabricated by a wet method, dispersing a polyimide precursor inside the plurality of laminated nonwoven fabrics, and then imidizing the polyimide precursor, a fibrous structure is obtained which contains, as a main component, fibers consisting substantially of polyimide resin and has a thickness of 1 mm or more and a basis weight of 40 g/m² or more and 150 g/m² or less. In addition, the present inventors have found that a fibrous structure which contains, as a main component, fibers consisting substantially of polyimide resin and has a thickness of 1 mm or more and a basis weight of 40 g/m² or more and 150 kg/m² or less is excellent in thermal insulation. Furthermore, the present inventors have found that these fibrous structures are excellent in thermal insulation in a stratospheric environment.

The above-described fibrous structure has a basis weight of 40 g/m² or more and 150 g/m² or less, and is significantly lightweight as compared with the above-described VIP. In addition, since the above-described fibrous structure contains a polyimide resin as a main component, the fibrous structure can function not only as a thermal insulation material but also as a refractory material. That is, when the VIP is used as a thermal insulation material for a battery, a refractory material is separately required, but when the above-described fibrous structure is used as a thermal insulation material for a battery, an additional refractory material is not required or a mass of the additional refractory material can be reduced. As a result, by using the above-described fibrous structure as a thermal insulation material for a battery, an energy density per unit mass of a battery (Wh/kg-storage cell) and/or a capacity per unit mass of an active material (mAh/g-active material) can be improved.

As described above, according to the present embodiment, for example, it is possible to improve an amount of energy per mass in a rechargeable battery and to achieve a rechargeable battery that is more lightweight and can store more electrical power. For example, the rechargeable battery may be brought to a disaster site and used for energy supply to victims or the like. Therefore, the fibrous structure, the thermal insulation material, the housing device, the battery, the flight vehicle, and the manufacturing method thereof according to the present embodiment can contribute to achievement of Goal 7 "Affordable and Clean Energy", Goal 13 "Specific Measures against Climate Change", or the like of Sustainable Development Goals (SDGs).

The present invention will be described below through embodiments of the invention, but the following embodiments do not limit the invention according to the claims. Further, not all of combinations of features described in the embodiments are essential to the solving means of the invention.

In the present specification, when a numerical range is expressed as "from A to B", the expression means A or more and B or less. In addition, "substituted or unsubstituted" means "substituted with any substituent, or not substituted with a substituent". A type of substituent described above is not particularly limited unless otherwise stated in the specification. In addition, a number of at least one substituent described above is not particularly limited unless otherwise stated in the specification.

### (Overview of flight vehicle 100)

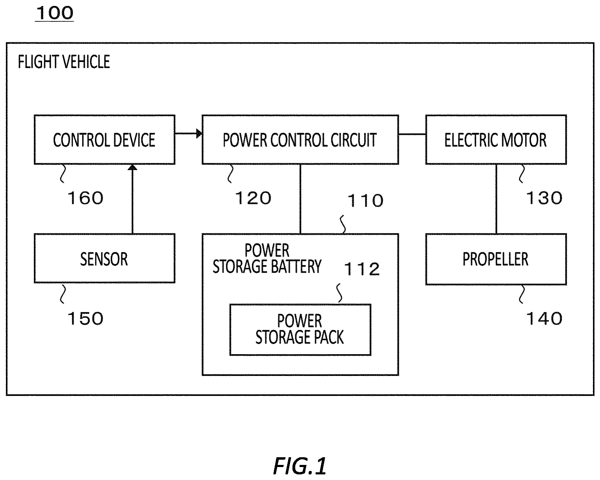

Fig. 1 schematically illustrates an example of a system configuration of a flight vehicle 100. In the present embodiment, the flight vehicle 100 includes a power storage battery 110, a power control circuit 120, one or more electric motors 130, one or more propellers 140, one or more sensors 150, and a control device 160. In the present embodiment, the power storage battery 110 has one or plurality of (may be referred to as one or more) power storage packs 112.

In the present embodiment, the flight vehicle 100 flies by using electrical energy accumulated in the power storage battery 110. Examples of the flight vehicle 100 include an airplane, an airship or a balloon, a hot-air balloon, a helicopter, a drone, and the like.

In the present embodiment, the power storage battery 110 receives electrical energy from an external charging device (not illustrated) via the power control circuit 120 to accumulate the electrical energy in one or more power storage packs 112. The external charging device may be a power generation device mounted on the flight vehicle 100. Examples of the above-described power generation device include a solar power generation device, a fuel cell, and the like. In addition, the power storage battery 110 supplies the electrical energy accumulated in the one or more power storage packs 112 to the electric motor 130 via the power control circuit 120.

In the present embodiment, the power storage pack 112 accumulates electrical energy (may be referred to as charging of the power storage pack 112). In addition, the power storage pack 112 also releases the accumulated electrical energy (which may be referred to as discharging the power storage pack 112). The power storage pack 112 may be a secondary battery.

A mass energy density of the power storage pack 112 is preferably 350 (Wh/kg-power storage pack) or more, more preferably 400 Wh/kg-power storage pack) or more, still more preferably 500 Wh/kg-power storage pack) or more, still more preferably 600 (Wh/kg-power storage pack) or more, and still more preferably 700 (Wh/g-power storage pack) or more. Accordingly, the power storage pack 112 particularly suitable for an application of a power source of a flight vehicle can be obtained.

A volume energy density of the power storage pack 112 may be 300 (Wh/m³-power storage pack) or more and 1200 (Wh/m³-power storage pack) or less, or 400 (Wh/m³-power storage pack) or more and 1000 (Wh/m³-power storage pack) or less. When the power storage pack 112 is mounted, as a part of a power source for the flight vehicle 100, on the flight vehicle 100, the volume energy density of the power storage pack 112 may be 600 (Wh/m³-power storage pack) or less, or may be 800 (Wh/m³-power storage pack) or less.

In the present embodiment, the power control circuit 120 controls input and output of electrical power of the power storage battery 110. The power control circuit 120 may control the input and output of the electrical power of the power storage battery 110 based on an instruction from the control device 160. For example, the power control circuit 120 includes a plurality of switching elements that operate based on a control signal from the control device 160.

In the present embodiment, the electric motor 130 receives the electrical energy from the power storage battery 110 via the power control circuit 120. The electric motor 130 uses the electrical energy received from the power storage battery 110 to rotate the propeller 140. Accordingly, the electric motor 130 can generate a propulsive force of the flight vehicle 100 by using the electrical energy accumulated in the power storage pack 112.

In the present embodiment, the sensor 150 measures various physical quantities related to a position and a posture of the flight vehicle 100. Examples of the sensor for measuring the various physical quantities related to the position and posture of the flight vehicle 100 include a GPS signal receiver, an acceleration sensor, an angular acceleration sensor, a gyro sensor, and the like. The sensor 150 may measure various physical quantities related to a state of the power storage battery 110. Examples of the sensor for measuring various physical quantities related to the state of the power storage battery 110 include a temperature sensor, a current sensor, a voltage sensor, and the like.

In the present embodiment, the control device 160 controls the flight vehicle 100. The control device 160 may control the input and output of the electrical power of the power storage battery 110 by controlling the power control circuit 120. For example, the control device 160 controls an output current, an output voltage, an input current, an input voltage, or the like of the power storage battery 110. Accordingly, the control device 160 can control the position and posture of the flight vehicle 100. The control device 160 may control the position and posture of the flight vehicle 100 by controlling the power control circuit 120 based on the output from the sensor 150.

The power storage battery 110 may be an example of a battery. The power storage pack 112 may be an example of an article or a power storage device. The electric motor 130 may be an example of a propulsive force generation device.

### (Example of another embodiment)

In the present embodiment, details of the flight vehicle 100 have been described by taking, as an example, a case where the flight vehicle 100 includes the power storage battery 110. However, the flight vehicle 100 is not limited to the present embodiment. In another embodiment, the battery mounted on the flight vehicle 100 may be a primary battery.

### (Overview of power storage battery 110)

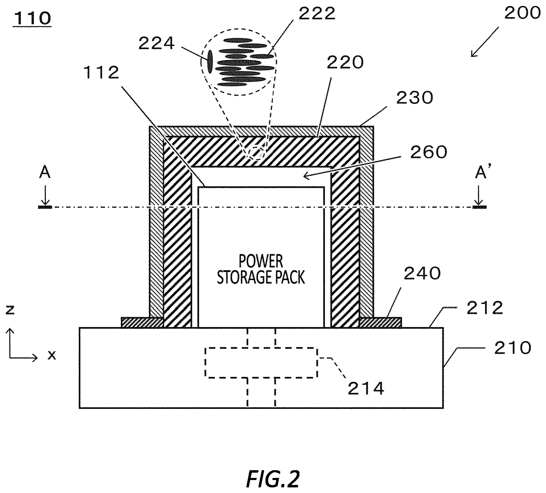

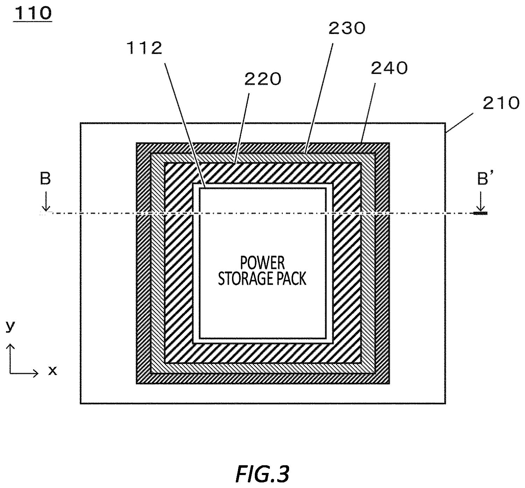

An example of the power storage battery 110 will be described with reference to Figs. 2 and 3. Fig. 2 schematically illustrates an example of a cross-sectional view of the power storage battery 110. Fig. 3 schematically illustrates an example of a planar cross-sectional view of the power storage battery 110. In the present embodiment, Fig. 2 illustrates an example of a B-B' cross section in Fig. 3, and Fig. 3 illustrates an example of an A-A' cross section in Fig. 2.

In the present embodiment, the power storage battery 110 includes, for example, the power storage pack 112 and a thermal insulation device 200. In the present embodiment, the thermal insulation device 200 includes, for example, a base plate 210, a thermal insulation member 220, a reflective member 230, and a welding member 240. According to the present embodiment, a housing space 260 for housing the power storage pack 112 is formed inside the thermal insulation device 200 by the base plate 210 and the thermal insulation member 220.

In the present embodiment, the base plate 210 includes, for example, a placement surface 212 and a vent valve 214. In the present embodiment, the thermal insulation member 220 includes, for example, a short fiber 222 disposed in a direction substantially parallel to an in-plane direction of the thermal insulation member 220. The thermal insulation member 220 may include a short fiber 224 disposed in a direction substantially parallel to a thickness direction of the thermal insulation member 220.

According to one embodiment, a plurality of short fibers 222 are chemically or physically bonded. For example, the plurality of short fibers 222 are adhered with an adhesive (not illustrated). According to another embodiment, a plurality of short fibers 222 and a plurality of short fibers 224 are chemically or physically bonded. For example, the plurality of short fibers 222 and the plurality of short fibers 224 are adhered with an adhesive (not illustrated).

In Fig. 2 and/or Fig. 3, a normal direction of the placement surface 212 is indicated as a z direction in the drawing. Similarly, an in-plane direction of the placement surface 212 is indicated as an x direction or a y direction in the drawing.

### (Details of thermal insulation device 200)

In the present embodiment, the thermal insulation device 200 houses the power storage pack 112. The thermal insulation device 200 protects the power storage pack 112, for example, by thermally insulating the power storage pack 112.

In the present embodiment, the base plate 210 supports or holds the power storage pack 112. The base plate 210 forms the housing space 260 together with the thermal insulation member 220. As described above, the power storage pack 112 is disposed inside the housing space 260 of the thermal insulation device 200. For example, the power storage pack 112 is placed on the placement surface 212 of the base plate 210. In one embodiment, the power storage pack 112 is disposed in contact with the placement surface 212. In another embodiment, the power storage pack 112 is disposed on the placement surface 212 with another member interposed therebetween.

In the present embodiment, the vent valve 214 controls movement of substances between an inside of the housing space 260 and an outside of the housing space 260. The vent valve 214 is configured to be closed when a pressure of gas inside the housing space 260 becomes greater than a predetermined value, and to be opened when the pressure of the gas inside the housing space 260 becomes greater than the predetermined value. Accordingly, the vent valve 214 can discharge the gas inside the housing space 260 to the outside of the housing space 260 when the pressure of the gas inside the housing space 260 becomes greater than the predetermined value.

In the present embodiment, the thermal insulation member 220 suppresses heat transfer between the inside of the housing space 260 and the outside of the housing space 260. The thermal insulation member 220 has, for example, a film-like shape, a sheet-like shape, or a plate-like shape. The thermal insulation member 220 is disposed on the placement surface 212 side of the base plate 210. The thermal insulation member 220 forms the housing space 260 together with the base plate 210. Details of the thermal insulation member 220 will be described later.

In the present embodiment, the reflective member 230 reflects radiant heat. For example, the reflective member 230 is disposed on at least a part of a surface of the thermal insulation member 220. When the thermal insulation member 220 has a film-like shape, a sheet-like shape, or a plate-like shape, the reflective member 230 is disposed, for example, on at least a part of a surface, of two surfaces of the thermal insulation member 220, which is opposite to a surface on the housing space 260 side. The reflective member 230 has, for example, a film-like shape, a sheet-like shape, or a plate-like shape.

Examples of the reflective member 230 include a metal foil, a vapor-deposited metal layer, a vapor-deposited metal film, a laminate film, and the like. Examples of a metal used for the above-described member include aluminum. The laminate film includes, for example, (i) a plurality of resin layers, and (ii) a reflective layer that is disposed between two resin layers included in the plurality of resin layers and reflects radiant heat. Examples of the reflective layer include a metal layer. Examples of the metal layer include an aluminum layer. Accordingly, when the laminate film is used as the reflective member 230, the reflective member 230 can have sufficient strength to withstand gas or flame generated by thermal runaway of the power storage pack 112.

In the present embodiment, the welding member 240 bonds the base plate 210 and the reflective member 230. The welding member 240 bonds the base plate 210 and the reflective member 230 by welding, for example. The welding member 240 may bond the base plate 210 and the thermal insulation member 220. The welding member 240 bonds the base plate 210 and the thermal insulation member 220 by welding, for example. Examples of the welding member 240 include a thermoplastic resin such as a polyethylene resin or a polypropylene resin.

In the present embodiment, the power storage pack 112 is housed inside the housing space 260. As described above, by disposing the thermal insulation member 220 on the placement surface 212 of the base plate 210, the housing space 260 is formed on the placement surface 212 side of the base plate 210.

### (Details of thermal insulation member 220)

In the present embodiment, the thermal insulation member 220 has a fibrous structure. The thermal insulation member 220 may be a member consisting substantially of a fibrous structure. A ratio of a mass of the fibrous structure to a mass of the thermal insulation member 220 may be 70 mass% or more.

The thermal insulation member 220 has, for example, a film-like shape, a sheet-like shape, or a plate-like shape. The thermal insulation member 220 may be a fibrous structure having a film-like shape, a sheet-like shape, or a plate-like shape.

### (Details of fibrous structure)

### (Composition of fibrous structure)

The above-described fibrous structure includes a plurality of fibers. A ratio of a mass of the plurality of fibers to a mass of the above-described fibrous structure may be 70 mass% or more. A ratio of a mass of a fiber having a specific feature to the mass of the above-described fibrous structure may be 70 mass% or more. Details of the specific feature will be described later. The above-described ratio is preferably 80 mass% or more, and more preferably 90 mass% or more.

The above-described fibrous structure may include a plurality of fibers and an adhesive for adhering the fibers to each other. A type of resin used as the adhesive is not particularly limited, but examples of the adhesive include a polyimide resin, a bismaleimide resin, an epoxy resin, an acrylic resin, a polyvinyl alcohol resin, and the like. A ratio of a mass of the adhesive to the mass of the above-described fibrous structure may be 30 mass% or less. The above-described ratio is preferably 20 mass% or less, and more preferably 10 mass% or less.

The above-described fibrous structure may be substantially free of a pulp component. The pulp component is defined as, for example, a fiber having a ratio of a length to a diameter (may be referred to as a width) that exceeds 300 (may be referred to as a long fiber). A ratio of a mass of the pulp component to the mass of the above-described fibrous structure may be less than 30 mass%. The above-described ratio is preferably 15 mass% or less, and more preferably 5 mass% or less.

### (Fiber)

Each of the plurality of fibers included in the fibrous structure may be a fiber consisting substantially of polyimide resin. A ratio of a mass of the polyimide resin to the mass of the plurality of fibers may be 70 mass% or more. Each of the plurality of fibers may contain an impurity that is present in a raw material of the polyimide resin or is inevitably mixed in a manufacturing step of the polyimide resin (may be referred to as an inevitable impurity). The above-described polyimide resin may be a non-thermoplastic polyimide resin.

A length of each of the plurality of fibers included in the fibrous structure may be 1.0 mm or more and 10.0 mm or less. The length of the fiber indicates a dimension in a longitudinal direction of the fiber. A ratio of a mass of the fiber having a length of 1.0 mm or more and 10.0 mm or less (may be referred to as a short fiber) to the mass of the above-described fibrous structure may be 70 mass% or more.

The length of each of the plurality of fibers is preferably 1.0 mm or more and 10.0 mm or less, and more preferably 2.0 mm or more and 5.0 mm or less. When the length of the fiber meets the above-described numerical range, the above-described fibrous structure exhibits excellent thermal insulation properties. The above-described fibrous structure exhibits excellent thermal insulation properties particularly in the stratospheric environment.

A width of each of the plurality of fibers included in the fibrous structure may be 1 µm or more and 100 µm or less. The width of the fiber indicates a dimension in a lateral direction of the fiber or the diameter of the fiber. A ratio of a mass of the fiber having a width of 1 µm or more and 100 µm or less to the mass of the above-described fibrous structure may be 70 mass% or more.

The width of each of the plurality of fibers is preferably 3 µm or more and 75 µm or less, and more preferably 5 µm or more and 50 µm or less. When the width of the fiber meets the above-described numerical range, the above-described fibrous structure exhibits excellent thermal insulation properties. The above-described fibrous structure exhibits excellent thermal insulation properties particularly in the stratospheric environment.

Each of the plurality of fibers included in the fibrous structure may be a short fiber having a length of 1.0 mm or more and 10.0 mm or less and a width of 1 µm or more and 100 µm or less. A ratio of a mass of the short fiber having the above-described length and width to the mass of the above-described fibrous structure may be 70 mass% or more.

Each of the plurality of fibers may be a short fiber obtained by a shaving step of a polyimide resin. The shaving step of the polyimide resin is performed by, for example, following procedures. First, a roll of polyimide film is prepared. For example, a strip-like polyimide film is wound in a cylindrical shape to fabricate the roll of polyimide film. Next, the roll of polyimide film is rotated. Next, a blade for shaving the polyimide film is pressed against a side surface of the rotating roll of polyimide film. Accordingly, a bundle of polyimide fibers corresponding to a thickness of the polyimide film and a shaving width is obtained. Thereafter, the above-described bundle of polyimide fibers is cut. Accordingly, short fibers of the polyimide resin are obtained.

In the step of fabricating the bundle of polyimide fibers, a width of the above-described short fiber can be adjusted by adjusting the thickness of the polyimide film and/or the shaving width. A length of the above-described short fiber can be adjusted in the step of cutting the bundle of polyimide fibers.

### (Polyimide resin)

In the present embodiment, the polyimide resin is obtained, for example, by polymerizing an aromatic diamine component and an aromatic acid anhydride component in an organic solvent. Examples of the aromatic diamine component include one or more components selected from the group consisting of paraphenylenediamine, 1,3-bis(4-aminophenoxy)benzene, 4,4'-diaminodiphenyl ether, and 3,4'-diaminodiphenyl ether. An aromatic diamine component other than the above-described aromatic diamine component may be used as a raw material of polyimide resin. Examples of the aromatic acid anhydride component include one or more components selected from the group consisting of 4,4'-oxydiphthalic anhydride, pyromellitic dianhydride, and 3,3',4,4'-biphenyltetracarboxylic dianhydride. An aromatic acid anhydride component other than the above-described aromatic acid anhydride component may be used as a raw material of polyimide resin.

### (Structure of fibrous structure)

The above-described fibrous structure has, for example, a film-like shape, a sheet-like shape, or a plate-like shape. A thickness of the above-described fibrous structure may be 1 mm or more. The thickness of the fibrous structure is defined as, for example, a minimum value among respective measured values of a width, a length, and a height of the fibrous structure. The thickness of the fibrous structure is preferably 1 mm or more and 20 mm or less, and more preferably 3 mm or more and 15 mm or less.

When the thickness of the fibrous structure meets the above-described numerical range, the fibrous structure exhibits excellent thermal insulation properties. The above-described fibrous structure exhibits excellent thermal insulation properties particularly in the stratospheric environment. Details of the thermal insulation properties of the fibrous structure will be described later.

The above-described fibrous structure may be an aggregate of the above-described fibers. The above-described fibrous structure is obtained, for example, by laminating a plurality of nonwoven fabrics fabricated by a wet method, dispersing a polyimide precursor inside the plurality of laminated nonwoven fabrics, and then imidizing the polyimide precursor. Each of the above-described nonwoven fabrics may include a plurality of fibers.

Each of the plurality of fibers included in the nonwoven fabric may have a same configuration as that of the plurality of fibers included in the above-described fibrous structure. Each of the plurality of fibers included in the nonwoven fabric may be a fiber consisting substantially of polyimide resin. A ratio of a mass of the polyimide resin to the mass of the plurality of fibers included in the nonwoven fabric may be 70 mass% or more. Each of the plurality of fibers may contain the above-described inevitable impurity.

According to the wet method, the nonwoven fabric is fabricated by a same fabricating method as that of paper. According to the wet method, the nonwoven fabric can be fabricated by using short fibers, as compared with a dry method. In addition, in many cases, the short fibers included in the nonwoven fabric fabricated by the wet method are disposed such that a length direction of the short fibers is substantially parallel to an in-plane direction of the nonwoven fabric. The in-plane direction of the nonwoven fabric is defined as, for example, a direction perpendicular to a thickness direction of the nonwoven fabric.

According to the present embodiment, since a plurality of nonwoven fabrics fabricated by the wet method are laminated in the manufacturing step of the above-described fibrous structure, the above-described fibrous structure includes the above-described short fibers 222. The above-described fibrous structure may contain the above-described pulp component (long fiber). The above-described fibrous structure may be substantially free of the above-described pulp component. In a cross section of the fibrous structure observed using a scanning electron microscope, a ratio of a number of at least one short fiber 222 to a number of at least one short fiber 224 may be less than 30%. Note that the above-described fibrous structure may contain the above-described pulp component or long fiber, or may be substantially free of the pulp component or the long fiber.

When the thickness of the fibrous structure is denoted by t, a width of an observation area by the scanning electron microscope may be Nt (N is 0.05 or more and 10 or less). A height of the observation area may be Mt (M is 0.5 or more and 1 or less). The width of the observation area may be substantially parallel to an in-plane direction of the fibrous structure, and the height of the observation area may be substantially parallel to a thickness direction of the fibrous structure.

According to the present embodiment, the above-described manufacturing step of the fibrous structure includes a step of dispersing the polyimide precursor inside a plurality of laminated nonwoven fabrics and then imidizing the polyimide precursor. Accordingly, a main fracture mode of the above-described fibrous structure becomes a cohesive fracture mode. That is, although the plurality of nonwoven fabrics are laminated in the manufacturing step of the above-described fibrous structure, interfacial fracture between layers of the plurality of nonwoven fabrics is suppressed.

### (Physical properties of fibrous structure)

The basis weight of the above-described fibrous structure may be 40 g/m² or more and 150 g/m² or less. The basis weight of the fibrous structure is derived, for example, by measuring a weight and an area of a sample piece and dividing the weight of the sample piece by the area of the sample piece.

The basis weight of the above-described fibrous structure is preferably 40 g/m² or more and 120 g/m² or less, and more preferably 40 g/m² or more and 100 g/m² or less. When the basis weight of the fibrous structure meets the above-described numerical range, the fibrous structure exhibits excellent thermal insulation properties. The above-described fibrous structure exhibits excellent thermal insulation properties particularly in the stratospheric environment. The fibrous structure having a basis weight that meets the above-described numerical range is particularly suitable as a thermal insulation material of a thermal insulation device mounted on a flight vehicle capable of flying in the stratosphere.

### (Thermal insulation properties of fibrous structure)

The fibrous structure constituting the thermal insulation member 220 has excellent thermal insulation properties due to the above-described novel configuration. Specifically, the above-described fibrous structure has significantly low thermal conductivity.

In one embodiment, under an environment in which a pressure is 100 kPa and a temperature is a room temperature (for example, 15°C or more and 25°C or less) (may be referred to as a first environment), the thermal conductivity of the fibrous structure measured by a steady state method is 0.020 W/m·K or more and 0.040 W/m·K or less. The above-described thermal conductivity is measured, for example, in accordance with JIS L 1927. The above-described thermal conductivity under the above-described first environment is preferably 0.025 W/m·K or more and 0.035 W/m·K or less, and more preferably 0.027 W/m·K or more and 0.033 W/m·K or less.

In another embodiment, a thermal conductivity of the fibrous structure estimated from a power root-mean-square (RMS) value of a heater required to maintain a temperature of a thermocouple, which is installed at a central portion inside an MB-type aluminum case arranged under an environment in which a pressure is 5 kPa and a temperature is -60°C (may be referred to as a second environment), at 20°C or higher and 30°C or lower is 0.005 W/m·K or more and 0.030 W/m·K or less. An estimated value of the above-described thermal conductivity under the above-described second environment is preferably 0.010 W/m·K or more and 0.020 W/m·K or less, and more preferably 0.012 W/m·K or more and 0.018 W/m·K or less.

### (Estimation procedure of thermal conductivity in stratospheric environment)

An estimated value of the thermal conductivity of the fibrous structure under the above-described second environment indicates an estimated value of the thermal conductivity of the fibrous structure under the stratospheric environment. In general, a thermal conductivity of an object is measured in accordance with JIS L 1927 under a condition in which a pressure is 100 kPa and a temperature is the room temperature. However, since the pressure is significantly low in the stratospheric environment, the thermal conductivity of the fibrous structure cannot be measured in accordance with JIS L 1927. In this regard, in the present embodiment, the thermal conductivity of the fibrous structure in the stratospheric environment is estimated by following procedures.

First, an MB-type aluminum case (MB14-6-14, manufactured by TAKACHI ELECTRONICS ENCLOSURE CO., LTD.) is prepared. Dimensions of the above-described MB-type aluminum case are 140 mm in length, 60 mm in width, and 140 mm in height. The MB-type aluminum case may be an example of an article imitating the power storage pack 112.

Next, a 5.4 Ω film heater (HK5417R5.3L12B, manufactured by Minco Products, Inc.) is installed inside the MB-type aluminum case. The heater is installed near a center of a bottom surface of the MB-type aluminum case. In addition, twelve thermistors (827-5937, manufactured by RS PRO) are installed inside the MB-type aluminum case. The above-described thermistors are disposed at eight corners of the MB-type aluminum case, at two locations near a center of a top surface of the MB-type aluminum case, on the heater, and at a substantially central position inside the MB-type aluminum case. The thermistor disposed at the substantially central position inside the MB-type aluminum case is suspended from the top surface of the MB-type aluminum case, for example. One of the two thermistors disposed near the center of the top surface is used, for example, to control a film heater. An output of the thermistor disposed at the substantially central position inside the case is used, for example, to calculate a power RMS value of the film heater.

Next, a fibrous structure to be estimated for thermal conductivity is prepared. A thickness of the fibrous structure is, for example, 9.0 mm. Next, a vapor-deposited aluminum layer having a thickness of 150 nm is formed on a surface on one side of the fibrous structure to be estimated for thermal conductivity. Any known procedure can be adopted as a fabricating procedure of the vapor-deposited aluminum layer. Thereafter, a whole of the outer surface of the above-described MB-type aluminum case is covered with the above-described fibrous structure having the vapor-deposited aluminum layer on its surface. Accordingly, a sample for estimating the thermal conductivity in the stratospheric environment is prepared.

Next, the above-described sample is arranged inside a constant temperature chamber (MZH-32H, manufactured by ESPEC CORP.). As the above-described constant temperature chamber, a cubic container having a side length of 1500 mm is used.

Next, an internal pressure of the constant temperature chamber is adjusted to a normal pressure (specifically, 100 kPa). In addition, an internal temperature of the constant temperature chamber is adjusted to -60°C. Next, a voltage of 10.5 V is applied to the heater, and measurement of a current value of the heater is started. In addition, by using a digital temperature controller (MTCTR, manufactured by MISUMI Corporation), an operation of the heater is controlled such that the heater is turned on when a temperature measured by the thermistor installed at the substantially central position inside the MB-type aluminum case becomes 20°C or lower, and the heater is turned off when the temperature becomes 30°C or lower. Thereafter, by using the digital temperature controller, an output time of the heater is measured until an ON/OFF cycle of the heater becomes substantially constant. In addition, based on the above-described measurement result, the power RMS value of the heater under the condition where the pressure is 100 kPa and the temperature is -60°C is derived.

Next, the internal pressure of the constant temperature chamber is adjusted to a pressure (specifically, 5 kPa) corresponding to an altitude of 60,000 feet, while maintaining the internal temperature of the constant temperature chamber at -60°C. While the internal pressure of the constant temperature chamber is adjusted, a voltage of 10.5 V is kept applied to the heater, and measurement of a current value of the heater is started. In addition, by using the digital temperature controller (MTCTR, manufactured by MISUMI Corporation), the operation of the heater is controlled such that the heater is turned on when the temperature measured by the thermistor installed at the substantially central position inside the MB-type aluminum case becomes 20°C or lower, and the heater is turned off when the temperature becomes 30°C or lower. Thereafter, by using the digital temperature controller, the output time of the heater is measured until the ON/OFF cycle of the heater becomes substantially constant. In addition, based on the above-described measurement result, the power RMS value of the heater under the condition where the pressure is 5 kPa and the temperature is -60°C is derived.

Next, the power RMS value of the heater under the environment in which a pressure is 100 kPa and a temperature is -60°C (under the above-described first environment) (may be referred to as a first power RMS value) is compared with the power RMS value of the heater under the environment in which a pressure is 5 kPa and a temperature is -60°C (under the above-described second environment) (may be referred to as a second power RMS value). In addition, the thermal conductivity of the fibrous structure under the second environment is estimated based on the above-described comparison result and the thermal conductivity of the fibrous structure under the first environment.

For example, when the second power RMS value is 1/2 of the first power RMS value, it can be estimated that a thermal insulation effect of the fibrous structure under the second environment is twice a thermal insulation effect of the fibrous structure under the first environment. Therefore, for example, when the second power RMS value is 1/2 of the first power RMS value, it can be estimated that the thermal conductivity of the fibrous structure under the second environment is twice the thermal conductivity of the fibrous structure under the first environment.

The thermal insulation device 200 may be an example of a housing device or a housing portion. The base plate 210 may be an example of a first member. The placement surface 212 may be an example of a placement surface on which an article is placed. The vent valve 214 may be an example of a discharge member. The thermal insulation member 220 may be an example of a thermal insulation material or a second member. The short fiber 222 may be an example of a first fiber. The short fiber 224 may be an example of a second fiber. The reflective member 230 may be an example of a reflector. A combination of the thermal insulation member 220 and the reflective member 230 may be an example of the thermal insulation material.

### (Example of another embodiment)

In the present embodiment, the details of the thermal insulation device 200 have been described by taking, as an example, a case where the base plate 210 and the reflective member 230 are welded by the welding member 240. However, the thermal insulation device 200 is not limited to the present embodiment. In another embodiment, the thermal insulation device 200 may not include the welding member 240.

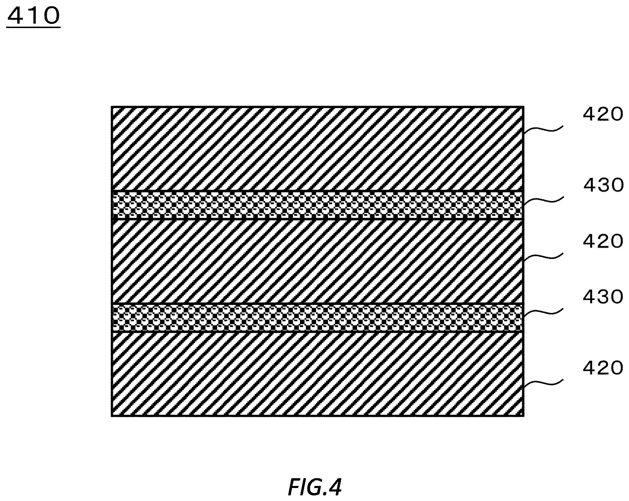

Fig. 4 schematically illustrates an example of a cross section of a thermal insulation member 410 in a thickness direction. The thermal insulation member 410 may be another example of the thermal insulation member 220. In the present embodiment, the thermal insulation member 410 includes one or more polyimide layers 420 and one or more aerogel layers 430.

The polyimide layer 420 includes a plurality of fibers consisting substantially of polyimide resin. In one embodiment, at least one of the one or more polyimide layers 420 may be a nonwoven fabric having a thickness of less than 1 mm. The polyimide layer 420 may be a nonwoven fabric fabricated by the dry method or a nonwoven fabric fabricated by the wet method. In another embodiment, at least one of the one or more polyimide layers 420 may be the above-described fibrous structure or a layer including the above-described fibrous structure. In still another embodiment, at least one of the one or more polyimide layers 420 may be a foam of polyimide resin.

The aerogel layer 430 may be a layer consisting substantially of a silica aerogel or may be a nonwoven fabric containing a silica aerogel. Examples of a material of the above-described nonwoven fabric include a glass fiber, a ceramic fiber, a polyimide fibers, an aramid fiber, and the like.

### (Manufacturing method of power storage battery 110)

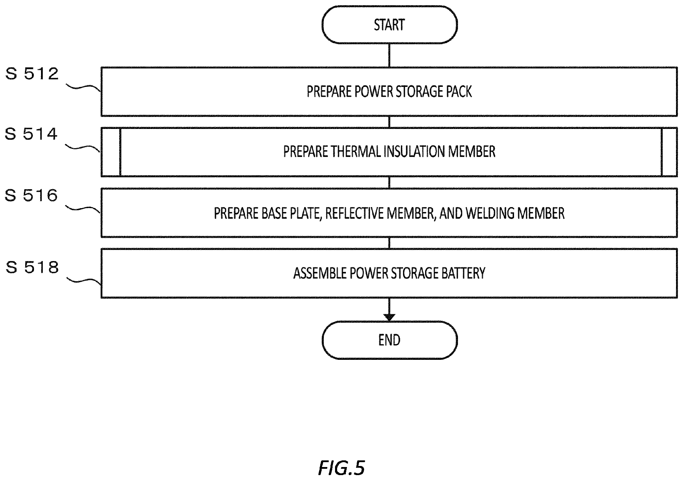

Fig. 5 schematically illustrates an example of a manufacturing method of the power storage battery 110. According to the present embodiment, first, in step 512 (may be abbreviated as S), the power storage pack 112 is prepared. Next, in S514, the thermal insulation member 220 is prepared. Details of a step of preparing the thermal insulation member 220 will be described later. Next, in S516, the base plate 210, the reflective member 230, and the welding member 240 are prepared. For example, the reflective member 230 is formed on a surface of one side of the thermal insulation member 220. Thereafter, in S518, the power storage battery 110 is assembled. Specifically, for example, the power storage pack 112 is placed on the placement surface 212 of the base plate 210. In addition, the thermal insulation member 220 is disposed on the placement surface 212 side of the base plate 210. The thermal insulation member 220 is disposed so as to cover the power storage pack 112. For example, the thermal insulation member 220 is disposed such that a surface, of surfaces of the thermal insulation member 220, which is opposite to a surface on which the reflective member 230 is formed is in contact with the surface of the power storage pack 112. Accordingly, the power storage battery 110 is fabricated.

### (Manufacturing method of thermal insulation member 220)

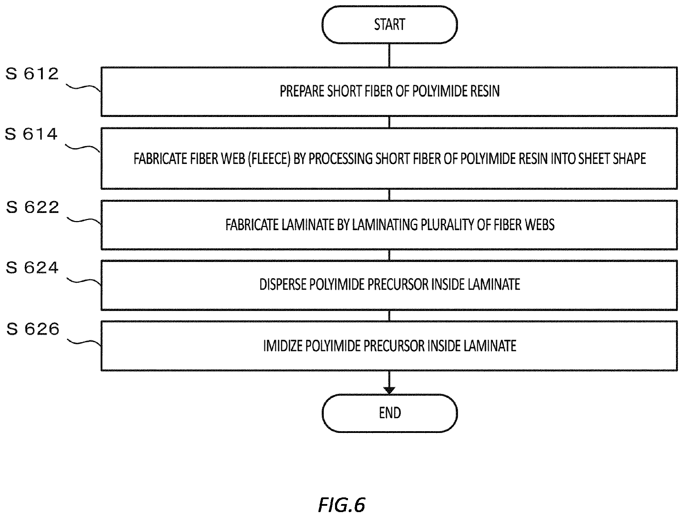

Fig. 6 schematically illustrates an example of a manufacturing method of the thermal insulation member 220. Fig. 6 may be an example of S514 in Fig. 5.

According to the present embodiment, first, in S612, a short fiber of polyimide resin is prepared. The short fiber of polyimide resin are obtained by the above-described shaving step of the polyimide resin. As described above, the short fiber of polyimide resin consists substantially of polyimide resin. The above-described polyimide resin may be a non-thermoplastic polyimide resin.

In addition, the polyimide fiber obtained by shaving in the above-described shaving step is cut such that the length of the fiber in the longitudinal direction is 1.0 mm or more and 10 mm or less. Accordingly, short fibers of polyimide resin are obtained.

Next, in S614, the short fibers of polyimide resin are processed into a sheet shape. Accordingly, a fiber web (may be referred to as a fleece) containing the short fibers of polyimide resin as a main component is fabricated. The above-described fleece may be a nonwoven fabric (may be referred to as a wet nonwoven fabric) fabricated by the wet method.

A fabricating procedure of the wet nonwoven fabric is not particularly limited, but the fabricating procedure of the wet nonwoven fabric includes, for example, a slurry formation step and a papermaking step. Details of the fabricating procedure of the wet nonwoven fabric are, for example, as follows.

First, in the slurry formation step, water, a water-soluble polymer compound, and short fibers of polyimide resin are mixed to fabricate a slurry in which the short fibers of polyimide resin are dispersed in water. The above-described slurry may contain various additives used in the production of paper or the wet nonwoven fabric. Examples of the above-described additives include a dispersant, an antifoaming agent, a viscosity modifier, and the like. Next, by using the above-described slurry and then treating the above-described slurry using a known papermaking technique in the papermaking step, a wet nonwoven fabric in which the short fibers of polyimide resin are tacked with the water-soluble polymer as a binder (may be referred to as tacking paper, a fiber web, a fleece, or the like) is fabricated. A thickness of the tacking paper obtained in the papermaking step is, for example, 1.0 mm or less.

The above-described water-soluble polymer compound may be any polymer compound that is water-soluble and has a decomposition temperature lower than a glass transition point of polyimide, and its type is not particularly limited. Examples of the water-soluble polymer compound include starch, alginic acid, carboxymethyl cellulose, gazein, vinylon, polyvinyl alcohol, vinyl acetate, polyvinyl acetate, and/or derivatives thereof, and the like.

Next, in S622 and S624, a precursor solution of polyimide is impregnated into a laminate in which a plurality of tacking papers are laminated. Accordingly, the laminate of tacking paper in which the precursor of polyimide is dispersed is obtained.

In the present embodiment, details of a procedure for fabricating a laminate including a precursor of polyimide are described by taking, as an example, a case where a laminate is fabricated by laminating a plurality of tacking papers in S622, and then a precursor solution of polyimide is impregnated into the laminate in S624. However, the procedure for fabricating the laminate containing the precursor of polyimide is not limited to the present embodiment. According to another embodiment, the laminate containing the precursor of polyimide is fabricated by impregnating a precursor solution of polyimide into each of a plurality of tacking papers and then laminating the plurality of tacking papers.

Examples of the polyimide precursor include a polyamic acid that becomes a non-thermoplastic polyimide by an imidization reaction. The polyimide precursor may be (i) a precursor of non-thermoplastic polyimide obtained by polymerizing an aromatic diamine component and an aromatic acid anhydride component in an organic solvent or may be (ii) a non-thermoplastic polyimide precursor in which the solvent is substituted with a solvent different from that used in the polymerization after polycondensation.

Next, in S626, the polyimide precursor dispersed inside the laminate is imidized. Specifically, the laminate containing the precursor of polyimide is heated. In S626, the laminate containing the precursor of polyimide is heated to a temperature that is equal to or higher than a decomposition temperature of the water-soluble polymer used to tack the short fibers of polyimide resin and is equal to or higher than a temperature at which imidization of the polyimide precursor is promoted. The laminate containing the precursor of polyimide is heated to, for example, 300°C or higher.

Accordingly, the polyimide precursor becomes a polyimide resin that bonds the short fibers contained in the tacking paper. In addition, the plurality of tacking papers constituting the laminate is bonded by the polyimide resin. As a result, a fibrous structure is obtained which contains a polyimide resin as a main component and has a thickness of 1.0 mm or more. In addition, according to the above-described procedures, a fibrous structure is obtained in which the main fracture mode is the cohesive fracture mode.

### (Pressure applied to tacking paper)

In S622, various settings may be adjusted such that a pressure applied to the tacking paper is less than 50 Pa. Accordingly, the thermal insulation member 220 can be fabricated which has a fibrous structure having a basis weight of 40 g/m² or more and 150 g/m² or less. In at least one of S622, S624, or S626, various settings may be adjusted such that the pressure applied to the tacking paper or the laminate is less than 50 Pa. Accordingly, the thermal insulation member 220 can be fabricated which has a fibrous structure having a basis weight of 40 g/m² or more and 150 g/m² or less. When the pressure applied to the tacking paper or the laminate in S622, S624, and S626 is less than 50 Pa, a fibrous structure with a small basis weight is fabricated. The fibrous structure having a small basis weight has a property particularly suitable as the material of the thermal insulation member 220 for a flight vehicle.

S622 may be an example of a lamination step. S624 may be an example of a dispersion step. S626 may be an example of an imidization step.

### (Examples)

For a purpose of more specifically describing the power storage battery 110 or the thermal insulation member 220, details of the power storage battery 110 or the thermal insulation member 220 will be described by following examples. However, various modifications or improvements may be made to the following examples, and the power storage battery 110 and the thermal insulation member 220 are not limited to the following examples.

### (Example 1)

In Example 1, a fibrous structure was fabricated according to following procedures. First, a polyimide film (Kapton 100H, manufactured by Du Pont-Toray Co., Ltd.) was wound into a roll to prepare a roll of polyimide film. The polyimide film had a thickness of 25 µm. According to the above-described procedures, short fibers of polyimide resin were shaved from the roll of polyimide film. An average value (number-based) of lengths of the short fibers measured by a Canadian standard freeness tester (JIS P 8226-2:2011) was 3 mm. Similarly, an average value (number-based) of widths of the short fibers measured by observation with an optical microscope was 50 µm.

Next, papermaking was performed using a slurry consisting of water-soluble polymer having a decomposition temperature lower than the glass transition temperature of polyimide and the short fibers of polyimide resin, thereby obtaining a roll-shaped fibrous paper in which the short fibers of polyimide resin were tacked with the water-soluble polymer. The above-described fibrous paper had a thickness of 0.4 mm.

Next, 24 sheets of 200 mm×300 mm were cut out from the roll-shaped fibrous paper described above. The 24 sheets were laminated, and a pressure of 20 Pa was applied, thereby obtaining a laminate.

Next, a precursor solution of polyimide was prepared, and a whole of the above-described laminate described above was immersed. Accordingly, a laminate in which a polyimide precursor was dispersed was obtained.

Next, the laminate containing the precursor of polyimide was heated at a temperature of 380°C for 15 minutes. Accordingly, a fibrous structure was obtained which contained the polyimide resin as a main component.

### (Thickness)

The thickness of the fibrous structure obtained in Example 1 was measured using a dial thickness gauge (H type). As shown in Table 1, the thickness of the fibrous structure obtained in Example 1 was 9 mm.

### (Basis weight)

The mass of the fibrous structure obtained in Example 1 was measured. The basis weight of the fibrous structure was derived by dividing the measured value of the mass of the fibrous structure by an area of the fibrous structure. Note that the area of the fibrous structure obtained in Example 1 is the same as the area of the above-described sheet, and is 200 mm×300 mm. As shown in Table 1, the basis weight of the fibrous structure obtained in Example 1 was 90 g/m².

### (Thermal conductivity under first environment)

The thermal conductivity of the fibrous structure obtained in Example 1 under the first environment was measured by the steady state method. Specifically, the above-described thermal conductivity was measured by the steady state method using KES-F7 II Thermo Labo (in accordance with JIS L 1927) manufactured by KATO TECH CO., LTD. As shown in Table 1, the thermal conductivity of the fibrous structure obtained in Example 1 under the first environment was 0.03 W/m·K.

### (Thermal conductivity under second environment)

The thermal conductivity of the fibrous structure obtained in Example 1 under the second environment was estimated according to the above-described procedures. Specifically, first, a vapor-deposited aluminum layer was formed on one surface of the fibrous structure obtained in Example 1. The vapor-deposited aluminum layer had a thickness of 150 nm. Next, an MB-type aluminum case (MB14-6-14, manufactured by TAKACHI ELECTRONICS ENCLOSURE CO., LTD.) was prepared. In addition, according to the above-described procedures, twelve thermistors and a 5.4 Ω film heater (HK5417R5.3L12B, manufactured by Minco Products, Inc.) were installed inside the MB-type aluminum case.

The above-described MB-type aluminum case was installed inside a constant temperature chamber (MZH-32H, manufactured by ESPEC CORP.), and then the above-described 5.4 Ω film heater was connected to a power supply via a digital temperature controller (MTCTR, manufactured by MISUMI Corporation). Dimensions of the above-described constant temperature chamber were 1500 mm in width, 1500 mm in length, and 1500 mm in height.

Next, the heater power RMS value under the first environment was measured. Specifically, first, the internal pressure of the constant temperature chamber was adjusted to 100 kPa. In addition, the internal temperature of the constant temperature chamber was adjusted to -60°C. Next, a voltage of 10.5 V was applied to the heater, and measurement of the current value of the heater was started. In addition, by using the above-described digital temperature controller, the operation of the heater was controlled such that the heater was turned on when the temperature measured by the thermistor installed at the substantially central position inside the MB-type aluminum case became 20°C or lower, and the heater was turned off when the temperature became 30°C or lower. Thereafter, by using the digital temperature controller, the output time of the heater was measured until the ON/OFF cycle of the heater became substantially constant.

The heater power RMS value under the first environment was derived based on the output time of the heater. As shown in Table 1, the heater power RMS value under the first environment was 19.5 W.

Next, the heater power RMS value under the second environment was measured. Specifically, the heater power RMS value under the second environment was measured by same procedures as that for the heater power RMS value under the first environment, except that the internal pressure of the constant temperature chamber was adjusted to 5 kPa. As shown in Table 1, the heater power RMS value under the second environment was 9.7 W.

The thermal conductivity of the fibrous structure obtained in Example 1 under the second environment was estimated based on a ratio between the heater power RMS value under the first environment and the heater power RMS value under the second environment. As shown in Table 1, an estimated value of the thermal conductivity of the fibrous structure obtained in Example 1 under the second environment was 0.006 W/m·K. Note that the estimated value of the thermal conductivity under the second environment may be an example of thermal conduction properties under the second environment.

### (Comparative Example 1)

Through same procedures as in Example 1 except that a foamed polyimide resin (SOLIMIDE TA-301, manufactured by Boyd Corporation) having a thickness of 7 mm was fabricated instead of preparing the fibrous structure, the thermal conductivity under the first environment was measured, and the thermal conductivity under the second environment was estimated. A measurement result and an estimation result are shown in Table 1. In addition, catalog values of a thickness and a basis weight of the foamed polyimide resin are shown in Table 1.

### (Reference Example 1)

Through same procedures as in Example 1 except that a vacuum insulation panel (U-Vacua series TZB9830E, manufactured by Panasonic Corporation) having a thickness of 10 mm was fabricated instead of preparing the fibrous structure, the thermal conductivity under the first environment was measured, and the thermal conductivity under the second environment was estimated. A measurement result and an estimation result are shown in Table 1. In addition, catalog values of a thickness and a basis weight of the vacuum insulation panel are shown in Table 1. Note that the above-described vacuum insulation panel had substantially no air remaining therein and was not damaged even under the second environment.

**(Table 1)**

| EVALUATION ITEMS | UNIT | EXAMPLE 1 | COMPARATIVE EXAMPLE 1 | REFERENCE EXAMPLE 1 |
|---|---|---|---|---|
| THICKNESS | mm | 9 | 7 | 10 |
| BASIS WEIGHT | g/m² | 90 | 44. 8 | 3700 |
| THERMAL CONDUCTIVITY UNDER FIRST ENVIRONMENT | W/m·K | 0.03 | 0.046 | 0.003 |
| POWER RMS VALUE OF HEATER UNDER FIRST ENVIRONMENT | W | 19.5 | 90.0 | 9. 0 |
| POWER RMS VALUE OF HEATER UNDER SECOND ENVIRONMENT | W | 9. 7 | 52. 0 | 5. 2 |
| THERMAL CONDUCTION PROPERTIES UNDER SECOND ENVIRONMENT | W/m·K | 0.006 | 0.030 | 0.003 |

While the embodiments of the present invention have been described, the technical scope of the present invention is not limited to the above-described embodiments. It is apparent to persons skilled in the art that various alterations or improvements can be added to the above-described embodiments. It is also apparent from the described scope of the claims that the embodiments added with such alterations or improvements can be included the technical scope of the present invention.

It should be noted that the operations, procedures, steps, stages or the like of each process performed by an apparatus, system, program, and method shown in the scope of the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

100: flight vehicle; 110: power storage battery; 112: power storage pack; 120: power control circuit; 130: electric motor; 140: propeller; 150: sensor; 160: control device; 200: thermal insulation device; 210: base plate; 212: placement surface; 214: vent valve; 220: thermal insulation member; 222: short fiber; 224: short fiber; 230: reflective member; 240: welding member; 260: housing space; 410: thermal insulation member; 420: polyimide layer; and 430: aerogel layer.

## Claims

1. A fibrous structure comprising a plurality of fibers consisting substantially of polyimide resin, wherein
a ratio of a mass of the plurality of fibers to a mass of the fibrous structure is 70 mass% or more,
a thickness of the fibrous structure is 1 mm or more, and
a basis weight of the fibrous structure is 40 g/m² or more and 150 g/m² or less.

2. The fibrous structure according to claim 1, wherein
a length of each of the plurality of fibers is 1.0 mm or more and 10.0 mm or less.

3. The fibrous structure according to claim 2, wherein
a width of each of the plurality of fibers is 1 µm or more and 100 µm or less.

4. The fibrous structure according to claim 1, wherein
the fibrous structure has a film-like shape, a sheet-like shape, or a plate-like shape,
the plurality of fibers include
a first fiber which is disposed such that its length direction is substantially parallel to an in-plane direction of the fibrous structure, and
a second fiber which is disposed such that its length direction is substantially parallel to a thickness direction of the fibrous structure, and
in a cross section of the fibrous structure observed using a scanning electron microscope, a ratio of a number of at least one second fiber to a number of at least one first fiber, each being the first fiber, is less than 30%.

5. The fibrous structure according to claim 1, wherein.
under a first environment in which a pressure is 100 kPa and a temperature is a room temperature, a thermal conductivity of the fibrous structure measured in accordance with JIS L 1927 is 0.020 W/m·K or more and 0.040 W/m·K or less.

6. The fibrous structure according to claim 1, wherein
a thermal conductivity of the fibrous structure estimated from a power RMS value of a heater required to maintain a temperature of a thermocouple, which is arranged at a central portion inside an MB-type aluminum case arranged under a second environment in which a pressure is 5 kPa and a temperature is -60°C, at 20°C or higher and 30°C or lower is 0.005 W/m·K or more and 0.030 W/m·K or less,
a power RMS value of the heater is measured in a state in which a whole of the MB-type aluminum case is covered with the fibrous structure having a vapor-deposited aluminum layer on its surface,
a thickness of the fibrous structure used to measure the power RMS value of the heater is 9.0 mm,
a thickness of the vapor-deposited aluminum layer used to measure the power RMS value of the heater is 150 nm, and
dimensions of the MB-type aluminum case used to measure the power RMS value of the heater are 140 mm in length, 60 mm in width, and 140 mm in height.

7. A fibrous structure obtained by laminating a plurality of nonwoven fabrics fabricated by a wet method, dispersing a polyimide precursor inside the plurality of nonwoven fabrics laminated, and then imidizing the polyimide precursor, wherein
each of a plurality of nonwoven fabrics includes a plurality of fibers consisting substantially of polyimide resin, and
a thickness of the fibrous structure is 1 mm or more.

8. A thermal insulation material comprising
the fibrous structure according to any one of claims 1 to 7.

9. The thermal insulation material according to claim 8, further comprising
a reflector which is disposed on at least a part of a surface of the fibrous structure and reflects radiant heat.

10. A housing device comprising
a housing portion for housing an article, wherein
the housing portion includes
a first member which has a placement surface on which the article is placed, and
a second member which is disposed on a side of the placement surface of the first member and forms a space for housing the article together with the first member, and
the second member has the fibrous structure according to any one of claims 1 to 7.

11. The housing device according to claim 10, wherein
the housing portion further includes
a discharge member for discharging gas inside the space to an outside of the space when a pressure of the gas inside the space becomes greater than a predetermined value.

12. A battery comprising:
the housing device according to claim 10; and
a power storage device which is disposed inside the space of the housing device.

13. A flight vehicle comprising:
the battery according to claim 12; and
a propulsive force generation device which generates a propulsive force by using electrical energy accumulated in the battery.

14. A method for producing a fibrous structure, comprising:
laminating a plurality of nonwoven fabrics fabricated by a wet method to fabricate a laminate having a thickness of 1 mm or more;
dispersing a polyimide precursor inside the plurality of nonwoven fabrics constituting the laminate; and
imidizing the polyimide precursor, wherein
each of a plurality of nonwoven fabrics includes a plurality of fibers consisting substantially of polyimide resin.

15. The method for producing the fibrous structure according to claim 14, wherein
the laminating includes laminating the plurality of nonwoven fabrics such that a pressure applied to each of the plurality of nonwoven fabrics is less than 50 Pa,
the dispersing includes dispersing a polyimide precursor inside the plurality of nonwoven fabrics such that the pressure applied to each of the plurality of nonwoven fabrics is less than 50 Pa, and
the imidizing includes imidizing the polyimide precursor such that the pressure applied to each of the plurality of nonwoven fabrics is less than 50 Pa.
